# EUROPEAN PATENT APPLICATION

(11) **EP 4 779 562 A1**
(43) Date of publication of application: **22.07.2026**
(21) Application number: 25876071.9
(22) Date of filing: 07.11.2025
(51) Int. Cl.: G06T 7/00

(54) **CYLINDRICAL SURFACE DETECTION METHOD AND APPARATUS**

(30) Priority: 08.11.2024 CN 202411586457
(71) Applicant: Fair Innovation (Suzhou) Robot System Co., Ltd., Suzhou, Jiangsu 215000 (CN)
(72) Inventor: SONG, Yu, Suzhou, Jiangsu 215000 (CN); DU, Donghui, Suzhou, Jiangsu 215000 (CN); ZHAI, Xiaoqin, Suzhou, Jiangsu 215000 (CN); YAO, Yiming, Suzhou, Jiangsu 215000 (CN)
(74) Representative: Neves, Ana
(86) International application number: PCT/CN2025/133565
(87) International publication number: WO 2026/098660

(57) **Abstract**

Embodiments of the present disclosure provide a cylindrical surface detection method and apparatus, relating to the field of computer technology. The method includes: obtaining a plane detection result corresponding to a point cloud to be detected; dividing approximately parallel planes in the plane detection result into plane groups; determining, for each plane group, a point cloud set corresponding to the plane group and a projection plane corresponding to the point cloud set from the point cloud to be detected, wherein point cloud points in a point cloud set and an acquisition device configured to obtain the point cloud to be detected are located on a same side of the projection plane corresponding to the point cloud set, and the projection plane is a plane in the corresponding plane group; determining a target point cloud set and a target projection plane from the obtained point cloud sets and the corresponding projection planes according to distributions of projection points of the point cloud sets on the corresponding projection planes; and detecting a target cylindrical surface according to the target point cloud set and the target projection plane. Thus, a cylindrical surface can be detected from a point cloud with high detection accuracy.

## Description

### CROSS-REFERENCE TO RELATED APPLICATIONS

The present disclosure claims the priority to the Chinese patent application with the filling No. 2024115864575 filed with the Chinese Patent Office on November 8, 2024, and entitled "CYLINDRICAL SURFACE DETECTION METHOD AND APPARATUS", the contents of which are incorporated herein by reference in entirety.

### TECHNICAL FIELD

The present disclosure relates to the field of computer technology, in particular to a cylindrical surface detection method and apparatus.

### BACKGROUND ART

Detecting a cylindrical surface from a point cloud is a task in computer vision and three-dimensional point cloud processing, aiming to detect and identify cylindrical objects or surfaces from three-dimensional point cloud data. Currently, in three-dimensional point cloud processing, it is sometimes necessary to detect a cylindrical surface based on a three-dimensional point cloud. For example, when identifying a workpiece weld seam, it is necessary to identify a cylindrical surface, and then determine the weld seam in the workpiece based on the identified cylindrical surface. Therefore, how to detect a cylindrical surface from a three-dimensional point cloud has become an urgent technical problem to be solved by those skilled in the art.

### SUMMARY

Embodiments of the present disclosure provide a cylindrical surface detection method, apparatus, electronic device, and readable storage medium, which can detect a cylindrical surface from a point cloud with high detection accuracy.

Embodiments of the present disclosure may be implemented as follows.

An embodiment of the present disclosure provides a cylindrical surface detection method, including steps of:
obtaining a plane detection result corresponding to a point cloud to be detected;
dividing planes in the plane detection result into plane groups, wherein when a plane group includes a plurality of planes, an included angle between a normal of one plane in the plane group and a normal of any other plane is less than a preset angle;
determining, for each plane group, a point cloud set corresponding to the plane group and a projection plane corresponding to the point cloud set from the point cloud to be detected, wherein point cloud points in a point cloud set and an acquisition device configured to obtain the point cloud to be detected are located on a same side of the projection plane corresponding to the point cloud set, and the projection plane is a plane in a corresponding plane group;
determining a target point cloud set and a target projection plane from the obtained point cloud sets and corresponding projection planes, according to distributions of projection points of the point cloud sets on the corresponding projection planes; and
detecting a target cylindrical surface according to the target point cloud set and the target projection plane.

An embodiment of the present disclosure further provides a cylindrical surface detection apparatus, including:
an obtaining module, configured to obtain a plane detection result corresponding to a point cloud to be detected;
a grouping module, configured to divide planes in the plane detection result into plane groups, wherein when a plane group includes a plurality of planes, an included angle between a normal of one plane in the plane group and a normal of any other plane is less than a preset angle;
a point cloud segmentation module, configured to determine, for each plane group, a point cloud set corresponding to the plane group and a projection plane corresponding to the point cloud set from the point cloud to be detected, wherein point cloud points in a point cloud set and an acquisition device configured to obtain the point cloud to be detected are located on a same side of the projection plane corresponding to the point cloud set, and the projection plane is a plane in the corresponding plane group;
a screening module, configured to determine a target point cloud set and a target projection plane from the obtained point cloud sets and the corresponding projection planes according to distributions of projection points of the point cloud sets on the corresponding projection planes; and
a detection module, configured to detect a target cylindrical surface according to the target point cloud set and the target projection plane.

An embodiment of the present disclosure further provides an electronic device, including a processor and a memory, wherein the memory stores machine-executable instructions executable by the processor, and the processor is configured to execute the machine-executable instructions to perform the cylindrical surface detection method described in the aforementioned embodiments.

An embodiment of the present disclosure further provides a readable storage medium storing a computer program, wherein the computer program, when executed by a processor, causes the processor to perform the cylindrical surface detection method as described in the aforementioned embodiments.

According to embodiments of the present disclosure, the cylindrical surface detection method, apparatus, electronic device, and readable storage medium operate as follows: first, obtaining a plane detection result of a point cloud to be detected that requires cylindrical surface detection; then, dividing the planes in the plane detection result into plane groups, wherein when a plane group includes a plurality of planes, an included angle between a normal of one plane in the plane group and a normal of any other plane is less than a preset angle; subsequently, for each plane group, determining a point cloud set corresponding to the plane group and a projection plane corresponding to that point cloud set from the point cloud to be detected, wherein point cloud points in a point cloud set and an acquisition device configured to obtain the point cloud to be detected are located on a same side of the projection plane corresponding to the point cloud set, and the projection plane is a plane in a corresponding plane group; then, determining a target point cloud set and a target projection plane from the obtained point cloud sets and corresponding projection planes according to distributions of projection points of the point cloud sets on the corresponding projection planes; and finally, detecting a target cylindrical surface according to the target point cloud set and the target projection plane. Thus, a cylindrical surface can be detected from a point cloud with high detection accuracy.

### BRIEF DESCRIPTION OF DRAWINGS

To describe the technical solutions in the embodiments of the present disclosure more clearly, the following briefly introduces the accompanying drawings required for describing the embodiments. It should be understood that the following drawings show only some embodiments of the present disclosure, and therefore should not be considered as limiting the scope. For those skilled in the art, other related drawings may be obtained from these drawings without creative effort.
FIG. 1 is a block diagram of an electronic device according to an embodiment of the present disclosure;
FIG. 2 is a schematic flowchart of a cylindrical surface detection method according to an embodiment of the present disclosure;
FIG. 3 is a schematic flowchart of sub-steps included in step S120 of FIG. 2;
FIG. 4 is a schematic flowchart of sub-steps included in step S130 of FIG. 2;
FIG. 5 is a schematic diagram showing a relationship between a j-th partial point cloud and upper and lower planes according to an embodiment of the present disclosure;
FIG. 6 is a schematic flowchart of sub-steps included in sub-step S132 of FIG. 4;
FIG. 7 is a schematic flowchart of sub-steps included in step S140 of FIG. 2;
FIG. 8 is a schematic flowchart of sub-steps included in sub-step S142 of FIG. 7;
FIG. 9 is a schematic flowchart of sub-steps included in sub-step S1422 of FIG. 8;
FIG. 10 is a schematic diagram of a straight line corresponding to a projection point; and
FIG. 11 is a block diagram of a cylindrical surface detection apparatus according to an embodiment of the present disclosure.

Reference numerals: 100, electronic device; 110, memory; 120, processor; 130, communication unit; 200, cylindrical surface detection apparatus; 210, obtaining module; 220, grouping module; 230, point cloud segmentation module; 240, screening module; 250, detection module.

### DETAILED DESCRIPTION OF EMBODIMENTS

To make the objectives, technical solutions, and advantages of the embodiments of the present disclosure clearer, the technical solutions in the embodiments of the present disclosure will be described clearly and completely below with reference to the accompanying drawings in the embodiments of the present disclosure. Apparently, the described embodiments are only some embodiments of the present disclosure, rather than all of them. Generally, components of the embodiments of the present disclosure described and illustrated in the drawings herein may be arranged and designed in various different configurations.

Therefore, the following detailed description of the embodiments of the present disclosure provided in the accompanying drawings is not intended to limit the scope of the claimed disclosure, but merely represents selected embodiments thereof. Based on the embodiments of the present disclosure, all other embodiments obtained by those of ordinary skill in the art without creative work shall fall within the scope of protection of the present disclosure.

It should be noted that relational terms such as "first" and "second" are only used to distinguish one entity or operation from another entity or operation, and do not necessarily require or imply any actual such relationship or order between these entities or operations. Moreover, the term "including", " containing" or any other variation thereof is intended to cover non-exclusive inclusion, such that a process, method, article, or device that includes a series of elements includes not only those elements, but also other elements not explicitly listed, or elements inherent to such process, method, article, or device. Without further limitation, an element defined by the phrase "including a ..." does not preclude the existence of other identical elements in the process, method, article, or device that includes said element.

Currently, a cylindrical surface in a point cloud may be detected in the following manner: first, planes in the point cloud are detected by a voting algorithm, and after a plane is detected, points on the plane are removed from the point cloud; next, a voting algorithm is used to detect a cylinder axis based on the remaining points, points voted for the cylinder axis are projected onto a plane perpendicular to the cylinder axis, a voting algorithm is used to detect a circle on the plane, and a cylindrical surface detection result is obtained by combining the cylinder axis detection result and the circle detection result. In the above cylindrical surface detection method in a point cloud, when the height of a cylinder is very small, the detection of the cylinder axis may be unstable.

For example, a workpiece containing a cylinder with a very small height has a cylinder radius of 70 mm and a cylinder height of 5 mm. Because the height of the cylinder is very small, there are relatively few points on the cylindrical surface. When these points are used for cylinder axis voting, the voting is prone to error. For example, there are very few points on the cylindrical surface in the obtained point cloud, and some noise points are included. In this case, when determining the finally recognized cylinder axis by voting, an inaccurate cylinder axis determined in combination with the noise points may be taken as the finally recognized cylinder axis, thereby causing inaccuracy in the cylindrical surface recognized based on the recognized cylinder axis and the plane perpendicular to the cylinder axis.

In view of the above, embodiments of the present disclosure provide a cylindrical surface detection method, apparatus, electronic device, and readable storage medium. Planes detected based on a point cloud to be detected are divided into at least one plane group, and the point cloud to be detected is segmented based on the at least one plane group to obtain a point cloud set corresponding to each plane group and a projection plane corresponding to the point cloud set. Then, by projecting the point cloud set onto the corresponding projection plane, the possibility that the projection points contain a circular curve is evaluated. Finally, the point cloud set most likely to contain a circular curve is selected to detect the cylindrical surface, thereby accurately detecting the cylindrical surface.

Some embodiments of the present disclosure will be described in detail below with reference to the accompanying drawings. In the absence of conflict, the following embodiments and features in the embodiments may be combined with each other.

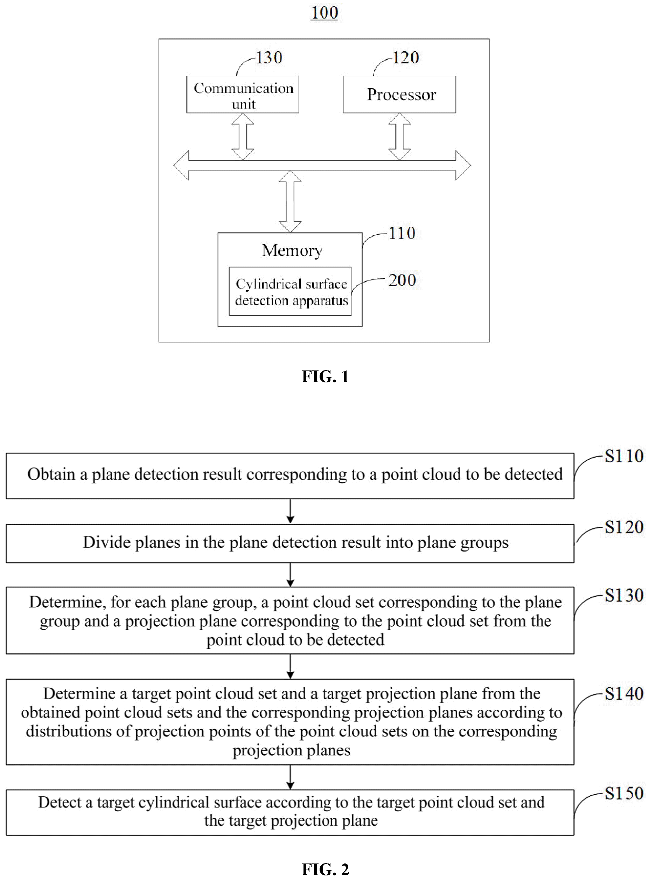

Please refer to FIG. 1, which is a block diagram of an electronic device 100 according to an embodiment of the present disclosure. The electronic device 100 may be, but is not limited to, a computer, a server, a welding robot, or the like. The electronic device 100 may include a memory 110, a processor 120, and a communication unit 130. The memory 110, the processor 120, and the communication unit 130 are directly or indirectly electrically connected to each other to achieve data transmission or interaction. For example, these components may be electrically connected to each other through one or more communication buses or signal lines.

The memory 110 is configured to store programs or data. The memory 110 may be, but is not limited to, a random access memory (RAM), a read-only memory (ROM), a programmable read-only memory (PROM), an erasable programmable read-only memory (EPROM), an electrically erasable programmable read-only memory (EEPROM), or the like.

The processor 120 is configured to read/write data or programs stored in the memory 110 and perform corresponding functions. For example, a cylindrical surface detection apparatus 200 is stored in the memory 110. The cylindrical surface detection apparatus 200 includes at least one software functional module that can be stored in the memory 110 in the form of software or firmware. The processor 120 executes various functional applications and data processing by running software programs and modules stored in the memory 110, such as the cylindrical surface detection apparatus 200 in the embodiment of the present disclosure, thereby implementing the cylindrical surface detection method in the embodiment of the present disclosure.

The communication unit 130 is configured to establish a communication connection between the electronic device 100 and other communication terminals through a network, and is configured to transmit and receive data through the network.

It should be understood that the structure shown in FIG. 1 is only a schematic structural diagram of the electronic device 100. The electronic device 100 may also include more or fewer components than those shown in FIG. 1, or have a configuration different from that shown in FIG. 1. Each component shown in FIG. 1 may be implemented by hardware, software, or a combination thereof.

Please refer to FIG. 2, which is a schematic flowchart of a cylindrical surface detection method according to an embodiment of the present disclosure. The method may be applied to the electronic device 100 described above. The specific flow of the cylindrical surface detection method is described in detail below. In this embodiment, the method may include steps S110 to S150.

Step S110: obtaining a plane detection result corresponding to a point cloud to be detected.

In this embodiment, the point cloud to be detected is a three-dimensional point cloud that requires cylindrical surface detection, which may be specifically determined according to actual conditions. The point cloud to be detected may be subjected to plane detection using any plane detection algorithm, and parameters of detected planes may be saved in the plane detection result. The parameters of a plane are configured to indicate the plane. Alternatively, a plane detection result obtained by other devices through plane detection of the point cloud to be detected may be received. It can be understood that the above method of obtaining the plane detection result is for illustrative purposes only, and may be determined in combination with actual requirements.

Step S120: dividing the planes in the plane detection result into plane groups.

In this embodiment, the planes included in the initial plane detection may be grouped into planes according to parameters of each plane in the plane detection result to obtain at least one plane group. A plane group may include one plane or a plurality of planes, which is determined by the actual situation. When a plane group includes a plurality of planes, an included angle between a normal of one plane in the plane group and a normal of any other plane is less than a preset angle, i.e., one plane in the plane group is parallel or approximately parallel to the other planes. The specific manner of plane grouping may be determined in combination with actual requirements and is not specifically limited herein.

Step S130: determining, for each plane group, a point cloud set corresponding to the plane group and a projection plane corresponding to the point cloud set from the point cloud to be detected.

In this embodiment, for a plane group, a point cloud set corresponding to the plane group and a projection plane corresponding to the point cloud set may be determined from the point cloud to be detected. The point cloud points in a point cloud set are point cloud points in the point cloud to be detected. The point cloud points in a point cloud set and an acquisition device configured to obtain the point cloud to be detected are located on a same side of the projection plane corresponding to the point cloud set, and the projection plane is a plane in the corresponding plane group, i.e., the point cloud set and the acquisition device are located above the projection plane corresponding to the point cloud set. The acquisition device may be a 3D point cloud camera.

By repeating the above processing for the remaining plane groups, the point cloud set and projection plane corresponding to each of the remaining plane groups can be obtained.

Herein, after all plane groups are obtained, the point cloud set corresponding to each plane group and the projection plane corresponding to the point cloud set may be determined; after each plane group is obtained, the point cloud set corresponding to that plane group and the projection plane corresponding to the point cloud set may be obtained through analysis and processing for that plane group; other orders may also be used, which may be determined in combination with actual requirements.

Step S140: determining a target point cloud set and a target projection plane from the obtained point cloud sets and the corresponding projection planes according to distributions of projection points of the point cloud sets on the corresponding projection planes.

In this embodiment, for each point cloud set, the point cloud points in the point cloud set may be projected onto the projection plane corresponding to the point cloud set. Then, according to the distribution of projection points corresponding to each point cloud set, a target point cloud set is determined from the obtained point cloud sets, and the projection plane corresponding to the target point cloud set is taken as the target projection plane. The target point cloud set is a screened point cloud set that most likely includes a circular curve. The specific method for determining the target point cloud set may be determined in combination with actual requirements.

Step S150: detecting a target cylindrical surface according to the target point cloud set and the target projection plane.

When the target point cloud set and the target projection plane are determined, the target point cloud set may be projected onto the target projection plane, and then a circle equation is determined according to the obtained projection points. Further, a cylinder axis equation is determined according to the circle equation and the target projection plane, thereby determining the target cylindrical surface. The target cylindrical surface is indicated by the circle equation and the cylinder axis equation. Thus, a cylindrical surface can be detected from a point cloud with high detection accuracy.

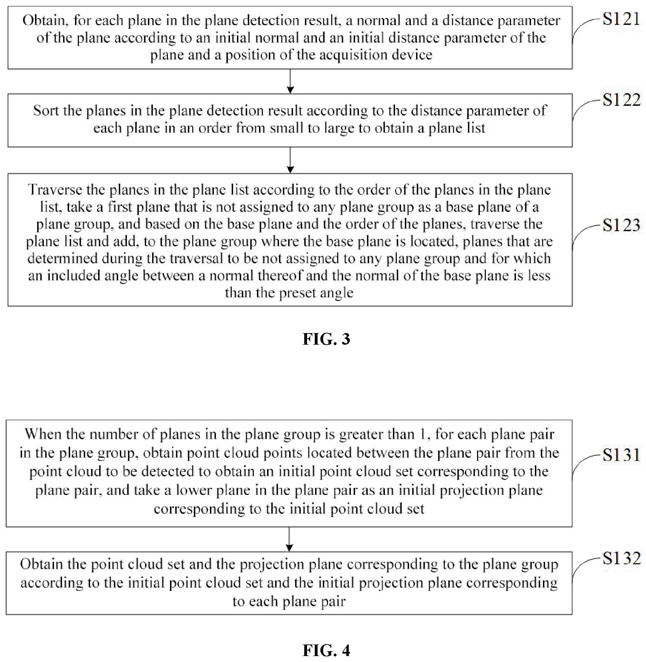

In this embodiment, to facilitate determining the projection plane, plane grouping may be performed in the manner shown in FIG. 3. Please refer to FIG. 3, which is a schematic flowchart of sub-steps included in step S120 of FIG. 2. In this embodiment, step S120 may include sub-steps S121 to S123.

Sub-step S121: obtaining, for each plane in the plane detection result, a normal and a distance parameter of the plane according to an initial normal and an initial distance parameter of the plane and a position of the acquisition device.

In this embodiment, the plane detection result includes initial normal *n* and initial distance parameter *ρ* of each detected plane. The initial normal *n* and initial distance parameter *ρ* are obtained by performing plane detection on the point cloud to be detected; i.e., the initial normal and initial distance parameter of a plane are configured to indicate the plane. The initial distance parameter *ρ* represents a distance from a coordinate origin to the plane, which may be positive or negative.

For each plane in the plane detection result, in combination with the position of the acquisition device configured to obtain the point cloud to be detected, it may be determined whether the initial normal of the plane faces the acquisition device. If the initial normal of the plane faces the acquisition device, the initial normal of the plane is taken as the normal of the plane, and the initial distance parameter of the plane is taken as the distance parameter of the plane. If the initial normal of the plane does not face the acquisition device, both the initial normal and the initial distance parameter of the plane are reversed, and the reversed initial normal is taken as the normal of the plane, and the reversed initial distance parameter is taken as the distance parameter of the plane. Thus, the normal and distance parameter of each plane can be obtained. The normal of a plane faces the acquisition device. When the initial normal of a plane is opposite to the normal, the initial distance parameter and the distance parameter of the plane are opposite numbers.

Optionally, as one possible implementation, it may be determined whether an initial normal direction of a plane i points toward the acquisition device in the following manner. Assuming an eye-on-hand mode, i.e., the acquisition device is located at the end of a robot, the tool center position (TCP) of the robot may be taken as the acquisition device position. A centroid position m of the point cloud to be detected may be calculated. Assuming the TCP position is *p_{tcp}, p_{ref} = p_{tcp} - m* point cloud centroid to the TCP position. The initial normal of plane i is *nᵢ*, and the initial distance parameter is *ρᵢ. nᵢ* and *p_{ref}* is calculated. If the inner product is less than 0, it indicates that the initial normal direction of plane i is opposite to *p_{ref}*. In this case, the initial normal *nᵢ* is reversed, and the reversed initial normal is taken as the normal of plane i. The initial distance parameter is also reversed, and the reversed initial distance parameter is taken as the distance parameter of plane i. If the inner product is not less than 0, it indicates that the initial normal direction of plane i is the same as *p_{ref}*. Then, the initial normal is directly taken as the normal of plane i, and the initial distance parameter is taken as the distance parameter of plane i.

Optionally, to avoid omitting planes, a variable i may be used to traverse the plane detection results, and the normal and distance parameter of each plane may be obtained through traversal processing. At the beginning of traversal, i=0. It is determined whether i is less than the number of planes included in the plane detection result. If less, the normal and distance parameter of the plane are obtained according to the initial normal and initial distance parameter of the plane, and then the variable i is incremented by 1. After updating, it is determined again whether i is less than the number of planes included in the plane detection result, until i is not less than the number of planes included in the plane detection result.

Sub-step S122: sorting the planes in the plane detection result according to the distance parameter of each plane in an order from small to large to obtain a plane list.

In this embodiment, through the processing of sub-step S121, the distance parameter *ρ* of each plane can be obtained. The planes indicated by the plane detection result may be sorted according to the order of the distance parameters *ρ* from small to large to obtain a plane list. Thus, planes farther from the acquisition device are placed earlier in the list, and planes closer to the acquisition device are placed later in the list.

Sub-step S123: traversing the planes in the plane list according to the order of the planes in the plane list, taking a first plane that is not assigned to any plane group as a base plane of a plane group, and based on the base plane and the order of the planes, traversing the plane list and adding, to the plane group where the base plane is located, planes that are determined during the traversal to be not assigned to any plane group and for which an included angle between a normal thereof and the normal of the base plane is less than the preset angle.

In this embodiment, when the plane list is obtained, the planes in the plane list may be sequentially traversed according to the order of the planes in the plane list. For a traversed plane, it is determined whether the plane has already been assigned to a plane group. If the plane has not been assigned to a plane group, the plane is taken as a base plane plane_0 of a plane group. After determining a base plane plane_0 of a plane group, the planes in the plane list are traversed according to the order of the planes. For a traversed plane, it is determined whether the plane has already been assigned to a plane group, and whether the plane is approximately parallel to the base plane plane_0. If the traversed plane is not assigned to a plane group and is approximately parallel to the base plane plane_0, the plane is saved into the plane group where the base plane plane_0 is located, and traversal continues until the planes in the plane list are traversed. In this way, planes in the plane list that are approximately parallel to the base plane plane_0 can be obtained. The planes approximately parallel to the base plane plane_0 and the base plane plane_0 are in one plane group. The planes in a plane group are ordered according to the distance parameters of the planes. Planes with smaller distance parameters are ordered earlier, and planes with larger distance parameters are ordered later. The order of planes in the plane group is configured to determine planes with adjacent spatial positions in the plane group in subsequent determination of the point cloud set and projection plane, and to determine the projection plane.

Whether a plane is approximately parallel to the base plane plane_0 may be determined according to whether an included angle between normals of the two planes is less than the preset angle. For example, a dot product of the normals of the two planes may be calculated. If the result is greater than or equal to a preset value, it can be determined that the two planes have very close normals, i.e., the two planes are approximately parallel. If the result is less than the preset value, it can be determined that the two planes are not approximately parallel.

Then, traversal of the plane list continues to determine a new base plane plane_0 for a new plane group, and then determine the new plane group, until grouping of the planes in the plane list is completed.

The above grouping method through traversal may be represented by the following process. Initialize a processed array, which is an all-zero array with a size equal to the size of the plane list (i.e., equal to the number of planes in the plane list). 0 indicates that the plane has not been visited (and thus not grouped); 1 indicates that the plane has been visited.

Use a variable i to traverse the planes in the plane list. First, determine whether processed[i] equals 1. If so, skip directly to the step of incrementing i. If processed[i] is not equal to 1, then set processed[i] = 1, take out plane i, use this plane as plane 0 (i.e., the base plane of a plane group), obtain the normal n0 of plane 0, and then store plane 0 in planes_seg. Planes_seg represents a group of planes configured to segment the point cloud, i.e., a plane group. Plane 0 is the zeroth plane in this plane group. This plane in this plane group has the smallest distance parameter ρ, i.e., is farthest from the acquisition device position.

After determining plane 0 of a plane group, then use a variable j to traverse planes, initially j = i+1. First, determine whether processed[j] equals 1. If so, skip directly to the step of incrementing j. If not, obtain the normal nj of plane j, and determine whether the following condition holds: n₀·nⱼ>=default. If the above condition holds, set processed[j] = 1, and store plane j in planes_seg. After completing the traversal of j, all planes in the plane list that are approximately parallel to plane 0 are found. This group of planes constitutes a plane group, corresponding to a segmentation scheme configured to segment the point cloud.

In this embodiment, for a plane group, the point cloud to be detected may be segmented in the following manner to obtain the point cloud set corresponding to the plane group and the projection plane corresponding to the point cloud set. By repeating the point cloud segmentation processing, the point cloud set corresponding to each plane group and the projection plane corresponding to the point cloud set can be obtained. One plane group corresponds to one point cloud set or a plurality of point cloud sets. One point cloud set corresponds to one projection plane. The projection plane is the plane immediately below the point cloud set.

For a plane group, determine whether the number of planes in the plane group equals 1.

If the number of planes in the plane group equals 1, it means there is only one plane in the plane group, i.e., the base plane (i.e., plane 0 or plane_0). Use this base plane to segment the point cloud to be detected, obtain a segmented part as a point cloud set corresponding to the plane group, and take the base plane as the projection plane corresponding to the point cloud set. The point cloud points in this point cloud set are point cloud points in the point cloud to be detected that are located above the base plane 0. Point cloud points located above a plane indicate that the point cloud points and the acquisition device are located on the same side of the plane.

A plane divides space into two parts. In this embodiment, only the part of points closer to the acquisition device is taken, i.e., the point cloud above the plane. When determining the point cloud set, obtain the normal n0 and the ρ parameter (i.e., distance parameter) ρ0 of the base plane. Use a variable k to traverse points in the point cloud to be detected, and determine whether the following condition holds, i.e., determine whether pₖ·n₀-ρ₀>0 holds. If the condition holds, store point pk in the cluster. Form plane_cluster from the cluster and plane 0, and store it in plane_clusters. Plane_clusters includes the point cloud set obtained based on the point cloud to be detected and the projection plane corresponding to the point cloud set.

If the number of planes in the plane group is greater than 1, the point cloud set corresponding to a plane group and the projection plane corresponding to the point cloud set may be determined in the manner shown in FIG. 4. Please refer to FIG. 4, which is a schematic flowchart of sub-steps included in step S130 of FIG. 2. In this embodiment, step S130 may include sub-steps S131 to S132.

Sub-step S131: when the number of planes in the plane group is greater than 1, for each plane pair in the plane group, obtaining point cloud points located between the plane pair from the point cloud to be detected to obtain an initial point cloud set corresponding to the plane pair, and taking a lower plane in the plane pair as an initial projection plane corresponding to the initial point cloud set.

Sub-step S132: obtaining the point cloud set and the projection plane corresponding to the plane group according to the initial point cloud set and the initial projection plane corresponding to each plane pair.

In this embodiment, at least one plane pair can be determined from the plane group by dividing two planes with adjacent spatial positions into a plane pair according to the spatial position of each plane in the plane group. The upper plane in the plane pair is close to the acquisition device, and the lower plane is far from the acquisition device.

For a plane pair, point cloud points located between the two planes of the plane pair may be filtered out from the point cloud to be detected as the point cloud points in the initial point cloud set corresponding to the plane pair, and the lower plane in the plane pair may be taken as the initial projection plane corresponding to the initial point cloud set.

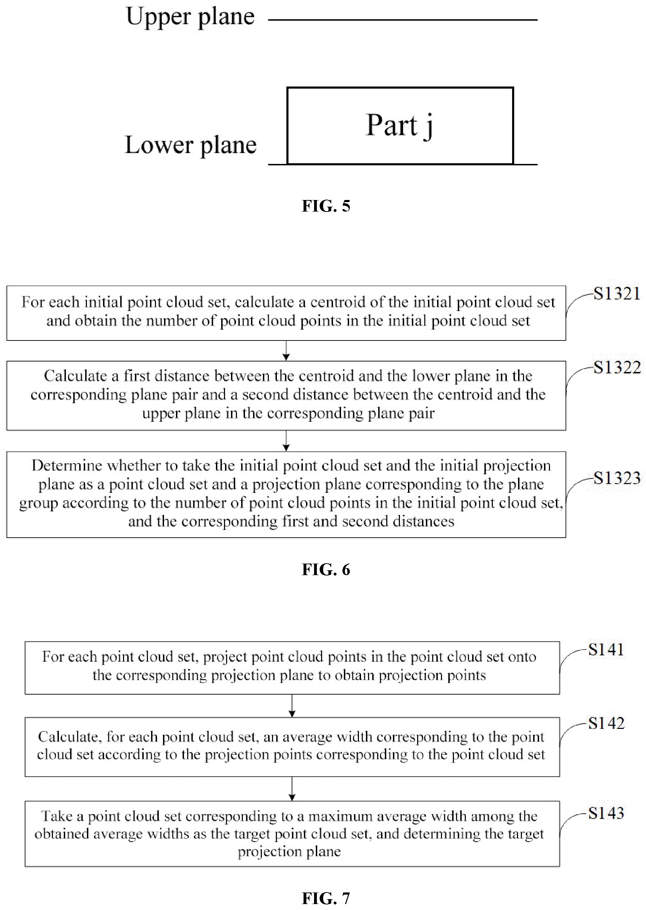

As shown in FIG. 5, a plane pair includes an upper plane and a lower plane. The upper plane and the acquisition device are located on the same side of the lower plane. The part of the point cloud to be detected located between the upper plane and the lower plane shown in FIG. 5 is taken as the initial point cloud set corresponding to the plane pair.

Optionally, when the initial point cloud set and the initial projection plane corresponding to a plane pair are obtained, the initial point cloud set and the initial projection plane corresponding to the plane pair may be directly taken as a point cloud set and projection plane corresponding to the plane group; it may also be further analyzed to determine whether the initial point cloud set and initial projection plane corresponding to the plane pair are to be taken as a valid point cloud set and projection plane.

As one possible implementation, it can be determined whether an initial point cloud set is a point cloud set by the method shown in FIG. 6. Optionally, the processing shown in FIG. 6 may be executed after obtaining an initial point cloud set; alternatively, after all initial point cloud sets are obtained, the processing shown in FIG. 6 may be executed on each initial point cloud set sequentially or in parallel; other execution orders may also be used, which can be determined according to actual requirements. Please refer to FIG. 6, which is a schematic flowchart of sub-steps included in sub-step S132 of FIG. 4. In this embodiment, sub-step S132 may include sub-steps S1321 to S1323.

Sub-step S1321: for each initial point cloud set, calculating a centroid of the initial point cloud set and obtaining the number of point cloud points in the initial point cloud set.

Sub-step S1322: calculating a first distance between the centroid and the upper plane in the corresponding plane pair and a second distance between the centroid and the lower plane in the corresponding plane pair.

Sub-step S1323: determining whether to take the initial point cloud set and the initial projection plane as a point cloud set and a projection plane corresponding to the plane group according to the number of point cloud points in the initial point cloud set, and the corresponding first and second distances.

In this embodiment, for an initial point cloud set of a plane pair, the centroid position of the initial point cloud set is calculated; thereafter, the distances between each of the two planes of the plane pair and the centroid position are calculated, i.e., the first distance and the second distance are obtained, wherein the first distance is the distance between the centroid position and the lower plane in the plane pair, and the second distance is the distance between the centroid position and the upper plane in the plane pair. Then, it can be determined whether to take the initial point cloud set as a point cloud set according to the specific magnitudes of the above two distances; or it can be determined whether to take the initial point cloud set as a point cloud set according to the specific magnitudes of the above two distances and the number of point cloud points in the initial point cloud set.

As one possible implementation, the second distance is subtracted from the first distance to obtain a distance difference, and it is determined whether this distance difference is greater than a preset distance difference. The preset distance difference may be determined specifically in combination with actual requirements. The preset distance difference is configured to analyze whether the initial point cloud set obtained by segmentation is farther from the lower plane. It is also determined whether the number of point cloud points in the initial point cloud set is greater than a first preset number, wherein the first preset number can be determined specifically in combination with actual requirements, for example, set to 0. If the number of point cloud points in the initial point cloud set is greater than the first preset number and the distance difference is less than the preset distance difference, then the initial point cloud set and the initial projection plane are taken as a point cloud set and projection plane corresponding to the plane group; if the number of point cloud points in the initial point cloud set is less than or equal to the first preset number, or the distance difference is greater than or equal to the preset distance difference, then the initial point cloud set is not taken as a point cloud set corresponding to the plane group.

To avoid omissions, the point cloud set and projection plane can be determined based on a plane group including a plurality of planes by traversal. The specific process may be as follows.

Assume there are n planes in a plane group planes_seg. Then, n-1 partial point clouds are obtained from the point cloud to be detected as initial point cloud sets. Use seg to save these n-1 parts. seg is a vector, each element of which is a point cloud pointer. During the point cloud segmentation process, the centroid of each partial point cloud needs to be calculated simultaneously.

Use a variable j to traverse the planes in the plane group planes_seg, obtaining the normal nj and ρ parameter ρj of the j-th plane, and the normal nj+1 and ρ parameter ρj+1 of the (j+1)-th plane. Then, use a variable k to traverse the point cloud points in the point cloud to be detected. First, determine whether the x-component of the point cloud point is Not a Number (NaN). If so, skip directly to the step of incrementing k; if not, determine whether the following conditions hold: pₖ·nⱼ-ρⱼ>0 and pₖ·nⱼ₊₁-ρⱼ₊₁<0. If they hold, store point pk in the j-th part of seg, and set the x-component of the k-th point to NaN.

After traversing k, calculate the centroid coordinate mj of the j-th partial point cloud, then calculate the distance dis_1 from mj to plane j and the distance dis_2 from mj to plane j+1, and store {dis_1, dis_2} in dis_2s. dis_2s is a vector containing n-1 elements; each element is a 2-tuple, representing the distances from the point cloud centroid of the j-th part to the two segmentation planes. When segmenting the j-th part, plane j is taken as the initial projection plane for this part.

Optionally, when it is determined to store a point pk in the j-th part of seg, the following calculation may be performed: mtotal = mtotal + pk, where mtotal is initially 0. When it is determined that the j-th partial point cloud has been segmented, the following calculation may be performed: mj = mtotal / (number of points in the j-th part), thereby obtaining the centroid coordinates of the j-th partial point cloud.

Through the above processing, the distances from the n-1 partial point clouds (i.e., initial point cloud sets) to the two segmentation planes are obtained. A variable j may be used to traverse these distance values. dis_2s[j][0] indicates the distance from the centroid of the j-th partial point cloud to the lower plane, and dis_2s[j][1] indicates the distance from the centroid of the j-th partial point cloud to the upper plane.

If dis_2s[j][0] - dis_2s[j][1] >= 10 or the size of seg[j] is 0, skip this part. dis_2s[j][0] - dis_2s[j][1] >= 10 indicates that the segmented partial point cloud is farther from the lower plane and closer to the upper plane. In this case, it can be determined that this partial point cloud is not the required point cloud set. It can be understood that the above value 10 is only an example of the preset distance difference, and the above value 0 is only an example of the first preset number. seg[j] represents the j-th initial point cloud set corresponding to a plane group.

The significance of point cloud segmentation is to segment the cylindrical surface. Regardless of how the acquisition device captures the scene, the cylindrical surface always forms an arc with the lower plane. As shown in FIG. 5 at this point, the distance between the centroid of the j-th partial point cloud and the lower plane should be less than its distance from the upper plane. If the distance between the centroid of the j-th partial point cloud and the lower plane is significantly greater than or equal to its distance from the upper plane, then this part cannot possibly be a cylindrical surface. Take a welding scenario as an example to explain the setting principle of the above requirements. The arc to be welded is concave. If the plane and the cylinder form a concave weld, the cylinder must be located above the plane and cannot be located below the plane. Therefore, the distance between the centroid of the j-th partial point cloud and the lower plane should be less than its distance from the upper plane.

At the same time, if the number of point cloud points in this partial point cloud is 0, it cannot be the required point cloud set.

If the above conditions are not met, i.e., it is not the case that dis_2s[j][0] - dis_2s[j][1] >= 10 or the size of seg[j] is 0, then store the j-th partial point cloud seg[j] in cloud_clusters of plane_cluster, and store plane_down[j] in plane_downs of plane_cluster.

As one possible implementation, when the number of planes in the plane group is greater than 1, point cloud points located above the plane closest to the acquisition device in the plane group may also be obtained from the point cloud to be detected, and this partial point cloud points may be taken as the point cloud points in a point cloud set corresponding to the plane group, and the plane closest to the acquisition device in the plane group may be taken as the projection plane corresponding to the point cloud set. The plane closest to the acquisition device in the plane group is the plane with the largest distance parameter in the plane group obtained through sub-steps S121 to S123. The method for obtaining the point cloud set corresponding to the plane closest to the acquisition device is the same as the method for obtaining the point cloud set when only one plane is included in the plane group described earlier, and will not be repeated here. Thus, when the number of planes in a plane group is plural (i.e., greater than 1), the point cloud set corresponding to the plane group includes the point cloud set determined based on a plane pair and the point cloud set determined based on the plane closest to the acquisition device in the plane group. The point cloud set determined based on the plane group and the corresponding projection plane may be added to plane_clusters.

In the above processing, the point cloud to be detected is segmented using various plane combinations. Each time a plane 0 is determined, a point cloud segmentation scheme is determined. However, only one segmentation scheme is correct, i.e., the plane forming the intersection line with the cylindrical surface is plane 0 or a plane parallel to plane 0. Only then is this segmentation scheme correct. To find the correct segmentation scheme and the segmented part corresponding to the cylinder in the correct segmentation scheme (i.e., the point cloud set corresponding to the cylinder), each segmented part may be analyzed to determine the target point cloud set and target projection plane configured for cylindrical surface detection. Here, the segmentation scheme corresponding to a plane group includes the point cloud set corresponding to the plane group and the projection plane corresponding to the point cloud set.

Please refer to FIG. 7, which is a schematic flowchart of sub-steps included in step S140 of FIG. 2. In this embodiment, step S140 may include sub-steps S141 to S143.

Sub-step S141: for each point cloud set, projecting point cloud points in the point cloud set onto the corresponding projection plane to obtain projection points.

Sub-step S142: calculating, for each point cloud set, an average width corresponding to the point cloud set according to the projection points corresponding to the point cloud set.

Sub-step S143: taking a point cloud set corresponding to a maximum average width among the obtained average widths as the target point cloud set, and determining the target projection plane.

In this embodiment, for a point cloud set, all point cloud points in the point cloud set may be projected onto the corresponding projection plane to obtain projection points; then, based on the obtained positional distribution of the projection points, the average width corresponding to the point cloud set is analyzed and obtained, wherein the average width corresponding to the point cloud set is calculated according to a width of a minimum bounding box of a projection point set conforming to arc characteristics. By repeating the above processing, the average width corresponding to each point cloud set can be obtained. Finally, compare the average widths corresponding to each point cloud set to determine the maximum average width, then take the point cloud set corresponding to this maximum average width as the target projection set, and take the projection plane corresponding to the point cloud set corresponding to the maximum average width as the target projection plane.

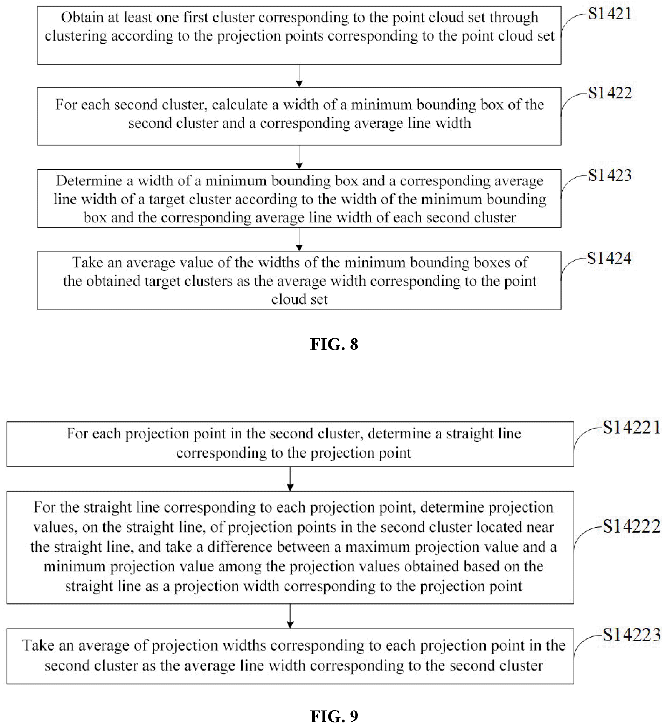

Optionally, as one possible implementation, the average width of a point cloud set may be obtained by the method shown in FIG. 8. Please refer to FIG. 8, which is a schematic flowchart of sub-steps included in sub-step S142 of FIG. 7. In this embodiment, sub-step S142 may include sub-steps S1421 to S1424.

Sub-step S1421: obtaining at least one first cluster corresponding to the point cloud set through clustering according to the projection points corresponding to the point cloud set.

In this embodiment, for the projection points of a point cloud set on the corresponding projection plane, a Euclidean clustering algorithm may be used for clustering, and the obtained at least one cluster part may be taken as at least one first cluster corresponding to the point cloud set.

Sub-step S1422: for each second cluster, calculating a width of a minimum bounding box of the second cluster and a corresponding average line width.

Optionally, all obtained first clusters may be taken as second clusters; or second clusters may be determined from the obtained first clusters based on preset rules. For example, for each first cluster, obtain the number of projection points of the first cluster. If the number of projection points of the first cluster is less than a second preset number, do not take the first cluster as a second cluster; if the number of projection points of the first cluster is greater than or equal to the second preset number, take the first cluster as a second cluster. Thus, first clusters with a larger number of projection points may be filtered out as second clusters, configured for subsequent calculation. The second preset number may be determined specifically according to actual requirements, for example, set to 10.

For each second cluster, the minimum bounding box of each second cluster can be analyzed and determined. The minimum bounding box is a 2-dimensional figure, a rectangle, having length and width. The width of this minimum bounding box can be obtained. The width of the minimum bounding box of a second cluster can indicate the overall characteristics of the second cluster. It is also necessary to analyze and obtain the average line width of the lines corresponding to each second cluster. The average line width represents the local average characteristics of the second cluster. Arc lines have a smaller average line width.

Optionally, a variable i may be used to traverse the second clusters corresponding to a point cloud set to obtain the minimum bounding box width and average line width of each second cluster, thereby avoiding omissions.

Optionally, the average line width corresponding to a second cluster may be obtained by the method shown in FIG. 9. Please refer to FIG. 9, which is a schematic flowchart of sub-steps included in sub-step S1422 of FIG. 8. In this embodiment, sub-step S1422 may include sub-steps S14221 to S14223.

Sub-step S14221: for each projection point in the second cluster, determining a straight line corresponding to the projection point.

Sub-step S14222: for the straight line corresponding to each projection point, determining projection values, on the straight line, of projection points in the second cluster located near the straight line, and taking a difference between a maximum projection value and a minimum projection value among the projection values obtained based on the straight line as a projection width corresponding to the projection point.

Sub-step S14223: taking an average of projection widths corresponding to each projection point in the second cluster as the average line width corresponding to the second cluster.

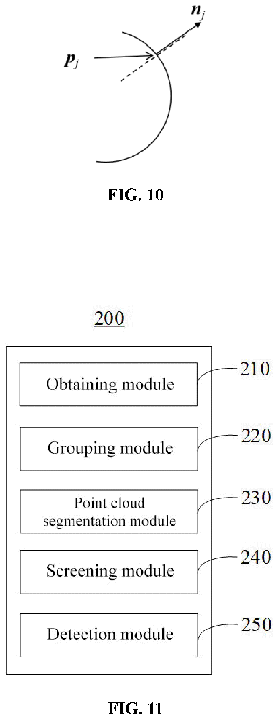

In this embodiment, for a projection point in the second cluster, a straight line corresponding to the projection point is determined by taking the projection point as the point to pass through and the normal direction of the projection point as the direction vector. As shown in FIG. 10, the projection point is pj, and the normal of projection point pj is nj. A straight line can be determined, which passes through this projection point pj and takes the normal nj of projection point pj as its direction.

For the straight line corresponding to this projection point, calculate the distance between each projection point in the second cluster and this straight line, and take the projection points with a distance less than a preset distance as the projection points in the second cluster located near this straight line. The preset distance may be determined specifically in combination with actual requirements. For each projection point near this straight line in the second cluster, calculate the projection value of each projection point on this straight line, then determine the maximum projection value and the minimum projection value among them by comparison, and take the difference between the maximum projection value and the minimum projection value as the projection width corresponding to this projection point. Here, the projection value corresponding to a projection point is: , where dpro represents the projection value, pk represents the projection point for which the projection value needs to be calculated, pj is the projection point through which the straight line passes, and nj is the normal corresponding to the straight line.

Repeat the above processing for the remaining projection points in the second cluster, thereby obtaining the projection width corresponding to each projection point in a second cluster. Thereafter, calculate the average of the projection widths corresponding to each projection point in the second cluster, and take it as the average line width corresponding to the second cluster.

Sub-step S1423: determining a width of a minimum bounding box and a corresponding average line width of a target cluster according to the width of the minimum bounding box and the corresponding average line width of each second cluster.

In this embodiment, after obtaining the minimum bounding box width and average line width of a second cluster in a point cloud set, it can be analyzed and judged whether the second cluster is a second cluster conforming to arc characteristics. If so, then take this second cluster as a target cluster corresponding to the point cloud set; if not, then do not take this second cluster as a target cluster corresponding to the point cloud set.

The inventors of the present disclosure have found through research that when a cluster is a straight line or an arc, its average line width has a relatively small value; when a cluster i is a clump of point cloud, its average line width has a relatively large value. Based on the above finding, it can be determined whether a second cluster is a target cluster in the following way.

For a second cluster corresponding to a point cloud set, determine whether the width of the minimum bounding box of the second cluster is not less than a first preset width, and determine whether the average line width of the second cluster is not greater than a second preset width. The first preset width and the second preset width may both be determined according to actual requirements. If the width of the minimum bounding box of the second cluster is not less than the first preset width, and the average line width of the second cluster is not greater than the second preset width, then it can be determined that the second cluster conforms to arc characteristics, and this second cluster can be taken as a target cluster. Conversely, if the width of the minimum bounding box of the second cluster is less than the first preset width, or the average line width of the second cluster is greater than the second preset width, then it can be determined that the second cluster does not conform to arc characteristics, and this second cluster is not taken as a target cluster.

Repeat the above steps for other second clusters corresponding to a point cloud set, and each target cluster corresponding to the point cloud set can be obtained.

Sub-step S1424: taking an average value of the widths of the minimum bounding boxes of the obtained target clusters as the average width corresponding to the point cloud set.

When each target cluster corresponding to a point cloud set is determined, the average of the widths of the minimum bounding boxes of each target cluster corresponding to the point cloud set can be calculated, and this average is taken as the average width corresponding to the point cloud set.

If a point cloud set does not include a target cluster, a smaller preset value can be set as the average width corresponding to the point cloud set, for example, setting -1 as the average width corresponding to a point cloud set including a target cluster.

The following uses traversal as an example to illustrate how to obtain the average width corresponding to a point cloud set.

Use a variable i to traverse the second clusters corresponding to a point cloud set.

For the traversed second cluster i, calculate the width of the minimum bounding box of second cluster i. The width of the minimum bounding box of second cluster i can represent the overall characteristics of this cluster.

In addition, it is necessary to calculate the average line width of second cluster i, as shown below. Use a variable j to traverse each point in this second cluster i, obtain the point position pj, calculate the normal nj of this point, and obtain a straight line passing through pj by using nj as the direction vector of the straight line. Use a variable k to traverse each point in the second cluster i, and calculate the perpendicular distance from this point to this straight line. The calculation formula is as follows: , where pk is the k-th point in the second cluster i, nj is the direction vector of the straight line, and pj is the point through which the straight line passes. If dver is less than a preset distance dth, it indicates that the point is near the straight line. Then calculate the projection value of this point on the straight line. The calculation formula for the projection value is as follows: . After traversing k, obtain the projection values on the straight line of all points in the second cluster i located near this straight line. By comparison, determine the maximum projection value dpro_max and the minimum projection value dpro_min, and then calculate the projection width for point j: dwidth = dpro_max - dpro_min. After traversing j, average all obtained projection widths to obtain the average line width of this second cluster i. The average line width represents the local average characteristics of the second cluster i.

When the minimum bounding box width and the corresponding average line width of a second cluster i are obtained, it can be determined whether the following conditions hold: minimum bounding box width >= first preset width, and average line width <= second preset width. If they hold, it indicates that this second cluster conforms to arc characteristics. Then perform an operation of incrementing num_circle by 1, and add the minimum bounding box width to the total width. Here, the initial value of num_circle is 0. After completing the traversal of second clusters for a point cloud set, the obtained num_circle can represent the number of cylinders contained in the point cloud set.

After completing the traversal of second clusters for a point cloud set, divide the obtained final total width by num_circle to obtain the result as the average width corresponding to the point cloud set. If num_circle in a point cloud set is 0, then -1 can be taken as the average width corresponding to the point cloud set.

When the average widths of all point cloud sets are obtained, the point cloud set corresponding to the maximum average width can be taken as the optimal segmented part. This part of the point cloud is projected onto the corresponding projection plane to detect the cylinder.

In this embodiment, first, for the planes in the plane detection result of the point cloud to be detected, adjust the initial normal orientation and initial distance parameters of the planes according to the position of the acquisition device, so that the plane normals all point toward the TCP direction. Subsequently, according to the normals and distance parameters of the planes obtained after the above processing, divide the planes indicated by the plane detection result into plane groups. Each group of planes corresponds to a segmentation scheme. Then, use multiple segmentation schemes to segment the point cloud to be detected, thereby obtaining a plurality of point cloud sets and corresponding projection planes. Next, project the point cloud points in the point cloud sets onto the corresponding projection planes, evaluate the possibility that the projection points contain a circular curve. Finally, select the point cloud set most likely to contain a circular curve to detect the cylindrical surface. Thus, cylindrical surface detection can be performed more stably, and cylindrical surface detection has higher accuracy.

To perform the corresponding steps in the foregoing embodiments and various possible implementations, an implementation of a cylindrical surface detection apparatus 200 is provided below. Optionally, the cylindrical surface detection apparatus 200 may adopt the device structure of the electronic device 100 shown in FIG. 1 above. Optionally, please refer to FIG. 11, which is a block diagram of a cylindrical surface detection apparatus 200 according to an embodiment of the present disclosure. It should be noted that the basic principles and technical effects of the cylindrical surface detection apparatus 200 provided in this embodiment are the same as those of the foregoing embodiments. For brevity, parts not mentioned in this embodiment can refer to corresponding content in the foregoing embodiments. In this embodiment, the cylindrical surface detection apparatus 200 may include: an obtaining module 210, a grouping module 220, a point cloud segmentation module 230, a screening module 240, and a detection module 250.

The obtaining module 210 is configured to obtain a plane detection result corresponding to a point cloud to be detected.

The grouping module 220 is configured to divide the planes in the plane detection result into plane groups. When a plane group includes a plurality of planes, an included angle between a normal of one plane in the plane group and a normal of any other plane is less than a preset angle.

The point cloud segmentation module 230 is configured to determine, for each plane group, a point cloud set corresponding to the plane group and a projection plane corresponding to the point cloud set from the point cloud to be detected. Point cloud points in a point cloud set and an acquisition device configured to obtain the point cloud to be detected are located on a same side of the projection plane corresponding to the point cloud set, and the projection plane is a plane in the corresponding plane group.

The screening module 240 is configured to determine a target point cloud set and a target projection plane from the obtained point cloud sets and the corresponding projection planes according to distributions of projection points of the point cloud sets on the corresponding projection planes.

The detection module 250 is configured to detect a target cylindrical surface according to the target point cloud set and the target projection plane.

Optionally, the above modules may be stored in the memory 110 shown in FIG. 1 or solidified in the operating system (OS) of the electronic device 100 in the form of software or firmware, and can be executed by the processor 120 in FIG. 1. Meanwhile, data, program code, etc. required for executing the above modules may be stored in the memory 110.

An embodiment of the present disclosure further provides a readable storage medium storing a computer program, wherein the computer program, when executed by a processor, causes the processor to perform the cylindrical surface detection method described above.

In summary, embodiments of the present disclosure provide a cylindrical surface detection method, apparatus, electronic device, and readable storage medium. First, obtain a plane detection result of a point cloud to be detected that requires cylindrical surface detection; then, divide the planes in the plane detection result into plane groups, wherein when a plane group includes a plurality of planes, an included angle between a normal of one plane in the plane group and a normal of any other plane is less than a preset angle; subsequently, for each plane group, determine a point cloud set corresponding to the plane group and a projection plane corresponding to that point cloud set from the point cloud to be detected, wherein point cloud points in a point cloud set and an acquisition device configured to obtain the point cloud to be detected are located on a same side of the projection plane corresponding to the point cloud set, and the projection plane is a plane in the corresponding plane group; then, determine a target point cloud set and a target projection plane from the obtained point cloud sets and the corresponding projection planes according to distributions of projection points of the point cloud sets on the corresponding projection planes; and finally, detect a target cylindrical surface according to the target point cloud set and the target projection plane. Thus, a cylindrical surface can be detected from a point cloud with high detection accuracy.

In the several embodiments provided by the present disclosure, it should be understood that the disclosed apparatus and method may also be implemented in other ways. The apparatus embodiments described above are only illustrative. For example, the flowcharts and block diagrams in the drawings show possible architectures, functions, and operations of devices, methods, and computer program products according to various embodiments of the present disclosure. In this regard, each block in the flowchart or block diagram may represent a module, a program segment, or a part of code, which contains one or more executable instructions configured to implement specified logical functions. It should also be noted that, in some alternative implementations, the functions noted in the blocks may occur in an order different from that noted in the drawings. For example, two consecutive blocks may actually be executed substantially in parallel, or they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or actions, or can be implemented by a combination of dedicated hardware and computer instructions.

In addition, each functional module in the various embodiments of the present disclosure may be integrated together to form an independent part, or each module may exist separately, or two or more modules may be integrated to form an independent part.

If the functions are implemented in the form of software functional modules and sold or used as independent products, they may be stored in a computer-readable storage medium. Based on such understanding, the essence of the technical solutions of the present disclosure, or the part contributing to the prior art, or part of the technical solutions, may be embodied in the form of a software product. The computer software product is stored in a storage medium and includes several instructions for causing a computer device (which may be a personal computer, a server, a network device, etc.) to perform all or part of the steps of the methods described in the various embodiments of the present disclosure. The aforementioned storage media include: U disk, mobile hard disk, read-only memory (ROM), random access memory (RAM), magnetic disk, optical disk, and various other media that can store program code.

The above descriptions are only optional embodiments of the present disclosure and are not intended to limit the present disclosure. For those skilled in the art, the present disclosure may have various modifications and changes. Any modifications, equivalent substitutions, improvements, etc., made within the spirit and principles of the present disclosure shall be included within the protection scope of the present disclosure.

### INDUSTRIAL PRACTICALITY

Embodiments of the present application provide a cylindrical surface detection method and apparatus, which can detect a cylindrical surface from a point cloud with high detection accuracy.

## Claims

1. A cylindrical surface detection method, comprising steps of:
obtaining a plane detection result corresponding to a point cloud to be detected;
dividing planes in the plane detection result into plane groups, wherein when a plane group comprises a plurality of planes, an included angle between a normal of one plane in the plane group and a normal of any other plane is less than a preset angle;
determining, for each plane group, a point cloud set corresponding to the plane group and a projection plane corresponding to the point cloud set from the point cloud to be detected, wherein point cloud points in a point cloud set and an acquisition device configured to obtain the point cloud to be detected are located on a same side of the projection plane corresponding to the point cloud set, and the projection plane is a plane in a corresponding plane group;
determining a target point cloud set and a target projection plane from the obtained point cloud sets and corresponding projection planes, according to distributions of projection points of the point cloud sets on the corresponding projection planes; and
detecting a target cylindrical surface according to the target point cloud set and the target projection plane.

2. The method according to claim 1, wherein the step of determining, for each plane group, a point cloud set corresponding to the plane group and a projection plane corresponding to the point cloud set from the point cloud to be detected comprises:
when the number of planes in the plane group is greater than 1, for each plane pair in the plane group, obtaining point cloud points located between the plane pair from the point cloud to be detected to obtain an initial point cloud set corresponding to the plane pair, and taking a lower plane in the plane pair as an initial projection plane corresponding to the initial point cloud set, wherein the plane pair consists of two planes with adjacent spatial positions in the plane group, an upper plane in the plane pair is closer to the acquisition device, and the lower plane is farther from the acquisition device; and
obtaining the point cloud set and the projection plane corresponding to the plane group according to the initial point cloud set and the initial projection plane corresponding to each plane pair.

3. The method according to claim 2, wherein the step of obtaining the point cloud set and the projection plane corresponding to the plane group according to the initial point cloud set and the initial projection plane corresponding to each plane pair comprises steps of:
for each initial point cloud set, calculating a centroid of the initial point cloud set and obtaining the number of point cloud points in the initial point cloud set;
calculating a first distance between the centroid and the lower plane in the corresponding plane pair and a second distance between the centroid and the upper plane in the corresponding plane pair; and
determining whether to take the initial point cloud set and the initial projection plane as a point cloud set and a projection plane corresponding to the plane group according to the number of point cloud points in the initial point cloud set, and corresponding first distance and second distance.

4. The method according to claim 3, wherein the step of determining whether to take the initial point cloud set and the initial projection plane as a point cloud set and a projection plane corresponding to the plane group according to the number of point cloud points in the initial point cloud set, and corresponding first distance and second distance comprises:
determining that the number of point cloud points is greater than a first preset number;
determining whether a distance difference is less than a preset distance difference, wherein the distance difference is obtained by subtracting the second distance from the first distance; and
if the number of point cloud points is greater than the first preset number and the distance difference is less than the preset distance difference, taking the initial point cloud set and the initial projection plane as a point cloud set and a projection plane corresponding to the plane group.

5. The method according to claim 2, wherein the step of determining, for each plane group, a point cloud set corresponding to the plane group and a projection plane corresponding to the point cloud set from the point cloud to be detected further comprises:
when the number of planes in the plane group is 1, obtaining point cloud points located above the plane in the plane group from the point cloud to be detected to obtain a point cloud set corresponding to the plane group, and taking the plane in the plane group as the projection plane corresponding to the point cloud set, wherein point cloud points located above a plane indicate that the point cloud points and the acquisition device are located on a same side of the plane; and/or
when the number of planes in the plane group is greater than 1, obtaining point cloud points located above the plane closest to the acquisition device in the plane group from the point cloud to be detected to obtain a point cloud set corresponding to the plane group, and taking the plane closest to the acquisition device in the plane group as the projection plane corresponding to the point cloud set, wherein when there are multiple planes in a plane group, the point cloud set corresponding to the plane group comprises a point cloud set determined based on a plane pair and a point cloud set determined based on the plane closest to the acquisition device in the plane group.

6. The method according to claim 2, wherein the step of dividing planes in the plane detection result into plane groups comprises:
obtaining, for each plane in the plane detection result, a normal and a distance parameter of the plane according to an initial normal and an initial distance parameter of the plane and a position of the acquisition device, wherein the initial normal and the initial distance parameter of a plane are configured to indicate the plane, the normal of a plane faces the acquisition device, and when the initial normal of a plane is opposite to the normal, the initial distance parameter and the distance parameter of the plane are opposite numbers;
sorting the planes in the plane detection result according to the distance parameter of each plane in an order from small to large to obtain a plane list; and
traversing the planes in the plane list according to a sort order of the planes in the plane list, taking a first plane that is not assigned to any plane group as a base plane of a plane group, and based on the base plane and the sort order of the planes, traversing the plane list and adding, to the plane group where the base plane is located, planes that are determined during traversal to be not assigned to any plane group and for which an included angle between a normal thereof and the normal of the base plane is less than the preset angle, wherein planes in the plane group are sorted according to the distance parameters of the planes, and an order of planes in the plane group is configured to determine planes with adjacent spatial positions in the plane group.

7. The method according to any one of claims 1 to 6, wherein the step of determining a target point cloud set and a target projection plane from the obtained point cloud sets and corresponding projection planes, according to distributions of projection points of the point cloud sets on the corresponding projection planes comprises steps of:
for each point cloud set, projecting point cloud points in the point cloud set onto the corresponding projection plane to obtain projection points;
calculating, for each point cloud set, an average width corresponding to the point cloud set according to the projection points corresponding to the point cloud set, wherein the average width is calculated according to a width of a minimum bounding box of a projection point set conforming to arc characteristics; and
taking a point cloud set corresponding to a maximum average width among the obtained average widths as the target point cloud set, and determining the target projection plane.

8. The method according to claim 7, wherein the step of calculating, for each point cloud set, an average width corresponding to the point cloud set according to the projection points corresponding to the point cloud set comprises steps of:
obtaining, according to the projection points corresponding to the point cloud set, at least one first cluster corresponding to the point cloud set through clustering;
for each second cluster, calculating a width of a minimum bounding box of the second cluster and a corresponding average line width, wherein the second cluster is the first cluster determined from the obtained first clusters;
determining a width of a minimum bounding box and a corresponding average line width of a target cluster according to the width of the minimum bounding box and the corresponding average line width of each second cluster, wherein the target cluster is a second cluster conforming to arc characteristics; and
taking an average value of the widths of the minimum bounding boxes of the obtained target clusters as the average width corresponding to the point cloud set.

9. The method according to claim 8, wherein the step of for each second cluster, calculating a corresponding average line width comprises:
for each projection point in the second cluster, determining a straight line corresponding to the projection point, wherein the straight line of the projection point passes through the projection point and has a normal of the projection point as its direction;
for the straight line corresponding to each projection point, determining projection values of projection points located near the straight line in the second cluster on the straight line, and taking a difference between a maximum projection value and a minimum projection value among the projection values obtained based on the straight line as a projection width corresponding to the projection point; and
taking an average of the projection widths corresponding to each projection point in the second cluster as the average line width corresponding to the second cluster.

10. The method according to claim 8, wherein the step of determining a width of a minimum bounding box and a corresponding average line width of a target cluster according to the width of the minimum bounding box and the corresponding average line width of each second cluster comprises:
for each second cluster, determining whether the width of the minimum bounding box of the second cluster is not less than a first preset width, and determining whether the average line width of the second cluster is not greater than a second preset width; and
if the width of the minimum bounding box of the second cluster is not less than the first preset width and the average line width of the second cluster is not greater than the second preset width, determining the second cluster as a target cluster.

11. A cylindrical surface detection apparatus, comprising:
an obtaining module, configured to obtain a plane detection result corresponding to a point cloud to be detected;
a grouping module, configured to divide planes in the plane detection result into plane groups, wherein when a plane group comprises a plurality of planes, an included angle between a normal of one plane in the plane group and a normal of any other plane is less than a preset angle;
a point cloud segmentation module, configured to determine, for each plane group, a point cloud set corresponding to the plane group and a projection plane corresponding to the point cloud set from the point cloud to be detected, wherein point cloud points in a point cloud set and an acquisition device configured to obtain the point cloud to be detected are located on a same side of the projection plane corresponding to the point cloud set, and the projection plane is a plane in the corresponding plane group;
a screening module, configured to determine a target point cloud set and a target projection plane from the obtained point cloud sets and the corresponding projection planes according to distributions of projection points of the point cloud sets on the corresponding projection planes; and
a detection module, configured to detect a target cylindrical surface according to the target point cloud set and the target projection plane.
